Europäisches Patentamt

European Patent Office

Office européen des brevets

(11) Numéro de publication: **0 643 507 A1**

## (12) DEMANDE DE BREVET EUROPEEN

(21) Numéro de dépôt: **94202535.4**

(22) Date de dépôt: **06.09.94**

(51) Int. Cl.6: **H04L 1/12,** H04M 11/06, H04L 25/38, H04L 1/20

(30) Priorité: **13.09.93 FR 9310870**

(43) Date de publication de la demande: **15.03.95 Bulletin 95/11**

(84) Etats contractants désignés: **DE FR GB IE IT**

(71) Demandeur: **TELECOMMUNICATIONS RADIOELECTRIOUES ET TELEPHONIOUES T.R.T. 88, rue Brillat Savarin F-75013 Paris (FR)**

(84) **FR**

(71) Demandeur: **PHILIPS ELECTRONICS N.V. Groenewoudseweg 1**

**NL-5621 BA Eindhoven (NL)**

(84) **DE GB IE IT**

(72) Inventeur: **Lepitre, Didier, Société Civile S.P.I.D. 156 Boulevard Haussmann F-85008 paris (FR)**

Inventeur: **Picart, Catherine , Société Civile S.P.I.D. 156 Boulevard Haussmann F-85008 paris (FR)**

(74) Mandataire: **Chaffraix, Jean Société Civile S.P.I.D. 156, Boulevard Haussmann F-75008 Paris (FR)**

(54) **Système et procédé pour adapter le débit d'une transmission à la qualité de la ligne et modem convenant à un tel système.**

(57) Selon ce système, les modems local (1) et distant (3) présentant, respectivement, des débits possibles de 4800 bits/s à 19200 bits/s et de 4800, 9600 à 14400 bits/s peuvent communiquer selon leurs débits communs 4800, 9600 à 14000 bits/s en adaptant leur débit selon les qualités du milieu de transmission (85).
Application : transmission de données.

FIG. 3

La présente invention concerne un système de transmission pour relier des modems, présentant plusieurs débits communs, comportant des moyens pour adapter le débit de la transmission de ces modems à la qualité de la ligne, comportant des premiers moyens, mis en oeuvre lors d'une phase de mise en communication :

- pour échanger entre les modems des informations concernant leurs débits,
- pour fournir une mesure de la qualité du support de transmission,
- pour changer le débit en fonction de ladite mesure.

L'invention concerne aussi un procédé pour adapter le débit de la transmission à la qualité de la ligne ainsi que des modems mettant en oeuvre ledit procédé.

Les supports de transmission sont soumis à des perturbations temporaires (bruit impulsif, sauts d'amplitude) ou permanentes pendant toute la connexion (bruit blanc), provoquant ainsi des resynchronisatons fréquentes ou un taux d'erreur important. Les resynchronisations arrêtent la transmission des données pendant quelques secondes.

Se pose donc le problème de l'adaptation du débit de transmission entre 2 modems (un modem local et un modem distant), en fonction de la qualité de la ligne et des capacités de débit du modem distant. Ceci est décrit dans la demande de brevet Japonaise N° 62-266581 du 23 octobre 1987 publiée sous le numéro 1-109935. Cette demande implique que les modems soient parfaitement connus les uns des autres.

Or, actuellement, on propose des modems qui sont capables de transmettre des données parmi 7 débits différents : de 4800 bits/s à 19200 bits/s par palier de 2400 b/s, par exemple. Le problème d'adaptation sur le bon débit se pose donc avec beaucoup plus d'acuité.

La présente invention propose un système qui permet de relier des modems présentant des débits diverses afin qu'ils puissent adapter leur débit mutuellement.

Pour cela, un système du genre décrit dans le préambule est remarquable en ce que, pour relier un modem local avec un modem distant impliquant une phase de synchronisation, il comporte des deuxièmes moyens, mis en oeuvre avant toute étape de synchronisation :

- pour définir un débit minimum d'échange débit_min(échange) tel que :

débit_min(échange) est la plus grande des valeurs débit_min(local) et débit_min(distant) où débit_min(local) et débit_min(distant) sont respectivement les débits minimum acceptables par les modems local et distant,

- pour définir un débit maximal d'échange débit_max(échange) tel que :

débit_max(échange) est la plus petite des valeurs débit_max(local) et débit_max(distant) où débit_max(local) et débit_max(distant) sont respectivement les débits maximum acceptables par les modems local et distant,

des troisièmes moyens mis en oeuvre après l'étape de synchronisation établir une valeur débit_trans qui est alors le débit de transmission défini par la qualité du support de transmission.

La description suivante faite en regard des dessins ci-annexés, le tout donné à titre d'exemple non limitatif, fera bien comprendre comment l'invention peut être réalisée.

La figure 1 montre un modem conforme à l'invention.

La figure 2 est un schéma montrant des blocs fonctionnels du modem de la figure 1.

La figure 3 montre un système selon l'invention avec une configuration de deux modems conformes à l'invention, reliés entre eux.

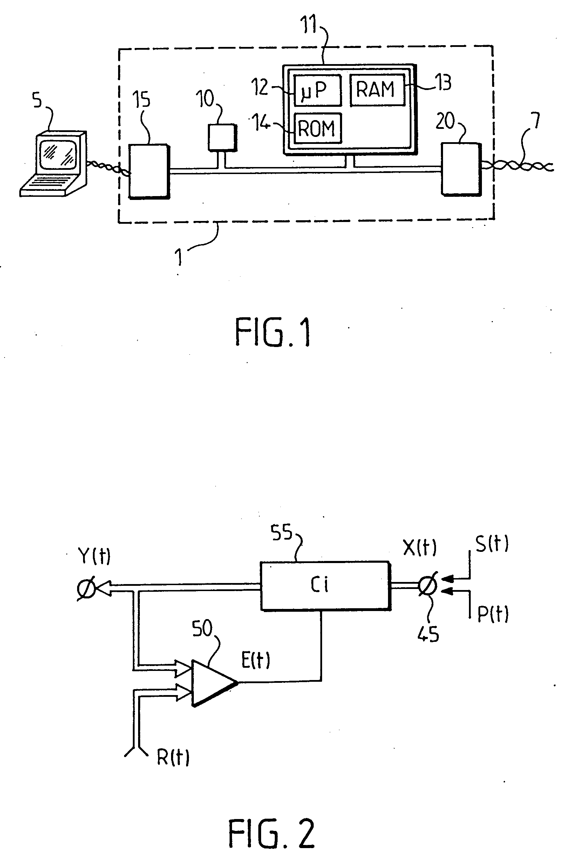

Le modem sur la figure 1 porte la référence 1, il interconnecte un terminal de type numérique 5 à une ligne de transmission du genre ligne téléphonique 7. Ce modem est constitué à partir d'ensembles à microprocesseur 10 et 11. L'ensemble 10 est affecté à la gestion du modem et l'ensemble 11 à processeur de signal comporte, de la manière habituelle, une unité de calcul (ALU) 12, une mémoire vive de travail 13 et une mémoire morte 14 contenant les instructions qui permettent la mise en oeuvre de l'invention. Un premier circuit d'interface 15 permet la liaison entre le modem 1 et le terminal 5. Un second circuit d'interface 20 permet de transformer d'une part les signaux en provenance de la ligne téléphonique 7 en signaux numériques et d'autre part de faire l'opération contraire. Un tel circuit est décrit dans le brevet européen EP 0 318 105. L'ensemble 11 effectue différentes fonctions et notamment celle d'égalisation. Cette fonction est illustrée sous forme de blocs fonctionnels à la figure 2.

Le signal à filtrer $X(t)$ sur l'accès 45 provenant de la ligne 7 est la somme d'un signal utile $S(t)$ et de perturbations dues à la ligne $P(t)$. Le signal filtré $Y(t)$ est comparé à un signal de référence $R(t)$ par un organe de soustraction 50. Le résultat est le signal d'erreur $E(t)$ qui agit sur un filtre égaliseur 55. Ce filtre est caractérisé par sa réponse impulsionnelle $H(t, C)$ qui dépend d'un jeu de coefficients notés $C$. L'asservissement des coefficients de l'égaliseur est réalisé au moyen de l'algorithme itératif du gradient en minimisant l'erreur.

L'équation à réaliser est la suivante :

$$C_I^{(n+1)} = C_I^{(n)} - \alpha E^{(nT)} - \frac{\delta y^{(nT)}}{\delta C_I^{(n)}}$$

C est un coefficient du filtre et T est le pas d'itération. La valeur de $\alpha$ est importante ; c'est le gain de l'égaliseur, elle détermine la durée de la convergence et la valeur de l'erreur résiduelle.

Ce signal d'erreur E(t) est aussi utilisé, selon l'invention, pour mesurer la qualité du support de transmission.

Le support de transmission est dit de mauvaise qualité lorsque :
- le taux d'erreur instantané est supérieur à un seuil $S_{r1}$, ou
- le taux d'erreur moyen à 5 secondes est supérieur à un seuil $S_{r2}$, ou
- le taux d'erreur moyen à 5 minutes est supérieur à un seuil $S_{r3}$.

Le support de transmission est dit de bonne qualité lorsque :
- le taux d'erreur instantané est inférieur à un seuil $S_{m1}$, et
- le taux d'erreur moyen à 5 secondes est inférieur à un seuil $S_{m2}$, et
- le taux d'erreur moyen à 5 minutes est inférieur à un seuil $S_{m3}$.

Chacun de ces seuils est une constante déterminée en fonction du débit de la transmission et du critère correspondant.

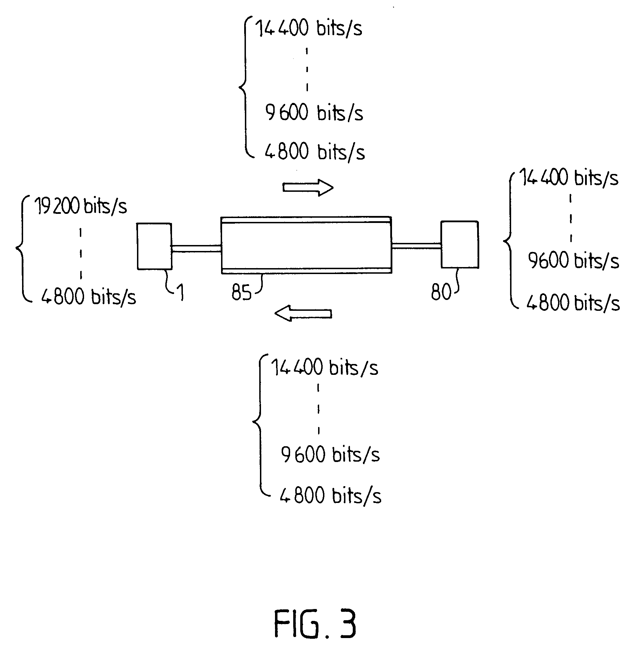

La figure 3 montre un système avec deux modems 1 et 80 séparés par un support de transmission 85. Le modem 1 sera considéré comme le modem local et le modem 80, le modem distant. Les modems distant et local peuvent avoir des débits différents l'un de l'autre, variant par pas de 2400 bits/s. Par exemple, le modem local 1 tolère un débit de 4800 bits/s à 19200 bits/s, alors que le modem distant 80 ne tolère que 9600 bits/s à 14400 bits/s. Il convient donc que les changements de débits restent compatibles avec les modems compte tenu de la qualité du support de transmission.

On définit tout d'abord les différents débits suivants :

débit__min(local) :
>débit minimal acceptable par le modem local,

débit__max(local) :
>débit maximal acceptable par le modem local.

Ces valeurs dépendent, par construction, du modem local.

Par ailleurs, on a:

débit__min(distant) :
>débit minimal acceptable par le modem distant,

débit__max(distant) :
>débit maximal acceptable par le modem distant.

Ces valeurs dépendent, par construction, du modem distant.

débit__trans :          débit réel de la transmission à un instant donné,

débit__opt :          débit optimal calculé selon la qualité de la ligne pour le sens de transmission du modem distant vers le modem local,

débit__min(échange) :     débit minimal commun aux deux modems,

débit__max(échange) :     débit maximal commun aux deux modems.

a - Avant la mise en route de la liaison, on initialise les paramètres comme suit :

débit__min(échange) = débit__min(distant) = débit__min(local)

débit__max(échange) = débit__max(distant) = débit__max(local)

b - Après la mise en route (par les signaux R1, R2 transmis à 4800 bits/s comme cela est défini par la norme V32 du CCITT) :

le modem local connaît les tolérances du modem distant, le modem distant connaît les tolérances du modem local.

On a alors :

débit__min(échange) =

max {débit__min(local) ; débit__min(distant)}

débit__max(échange) =

min {débit__max(local) ; débit__max(distant)}

débit__trans = 4800 bits/s (qui est le débit défini au départ par la norme).

Le changement de débit est possible si :

débit__opt ~ débit__trans

Le repli de débit est possible si les conditions suivantes sont respectées :

    débit__opt < débit__trans

    débit__min(échange) < débit__trans

La remontée de débit est possible si les conditions suivantes sont respectées :

    débit__opt > débit__trans

    débit__max(échange) > débit__trans

Le calcul du débit optimal ne dépend pas directement des capacités du modem, il est le suivant :

Si la qualité de la ligne est jugée mauvaise, on définit un débit optimal débit__opt :

    débit__opt =

    max {débit__trans - var__de__débit ; débit__min(local)}

Si la qualité de la ligne est jugée bonne :

    débit__opt =

    min {débit__trans + var__de débit : débit__max(local)}

où en pratique var__de__débit = 2400 bits/s.

La première synchronisation des modems se fait toujours au débit__max(échange). Lors d'un repli, débit__max (échange) prend la valeur de débit__trans. Il interdit alors la remontée en débit. Pour éviter le blocage, dans le cas où le critère de remontée de débit est validé depuis 10 minutes et si le débit__opt n'est pas supérieur à débit__max(distant) ni à débit__max(local), la valeur de débit__max(échange) devient :

    débit__max(échange) = débit__opt

Pour que ce changement de débit puisse s'effectuer, on relance la séquence de synchronisation et on utilise lesdits signaux R1 et R2 pour permettre ce changement.

Ainsi, grâce à la méthode, on prend en compte le débit optimal calculé par l'un des modems, et on l'impose au modem distant, seulement si celui-ci est susceptible de l'accepter. L'avantage en est que la décision peut être prise par l'un ou l'autre des modems, et ainsi résout le problème des liaisons dissymétriques.

Ceci rend le procédé très souple, mais aussi fiable puisque chaque modem est informé des débits acceptables par le distant, et ne demandera pas de changement de débit intempestif.

**- Exemple d'utilisation (voir fig.3)**

On rappelle que le modem 1 a pour capacité de débit : 19200 bits/s à 4800 bits/s, et le modem 80 : 14400 bits/s à 9600 bits/s.

Le support de transmission entre le modem 1 vers le modem 80 se dégrade, puis après quelques minutes, la qualité redevient bonne.

Voici les changements de débit occasionnés :

```
Modem 1.

débit_max(local) = 19200 bits/s

débit_min(local) = 4800 bits/s
```

Modem 80.

débit_max(local) = 14400 bits/s

débit_min(local) = 9600 bits/s

SYNCHRONISATION DE DÉMARRAGE

Modem 1.

débit_max(distant) = 14400 bits/s

débit_min(distant) = 9600 bits/s

débit_max(échange) = 14400 bits/s

débit_min(échange) = 9600 bits/s

débit_trans = 14400 bits/s

Modem 80.

débit_max(distant) = 19200 bits/s

débit_min(distant) = 4800 bits/s

débit_max(échange) = 14400 bits/s

débit_min(échange) = 9600 bits/s

débit_trans = 14400 bits/s

1 : DEBIT_OPT = 16800 bits/S

80: DEBIT_OPT = 12000 bits/S

↓

REPLI DU DEB1T PAR 80

Modem 1.

débit_max(échange) = 12000 bits/s

débit_min(échange) = 9600 bits/s

débit_trans = 12000 bits/s

Modem 80.

débit_max(échange) = 12000 bits/s

débit_min(échange) = 9600 bits/s

débit_trans = 12000 bits/s

1 : DEBIT_OPT = 14400 bits/s

80 : DEBIT_OPT = 9600 bits/s

↓

REPLI DU DEBIT PAR 80

Modem 1.

débit_max(échange) = 9600 bits/s

débit_min(échange) = 9600 bits/s

débit_trans = 9600 bits/s

**Modem 80.**

débit_max(échange) = 9600 bits/s

débit_min(échange) = 9600 bits/s

débit_trans = 9600 bits/s

```
                    1 : DEBIT_OPT = 12000 bits/s
                   80 : DEBIT_OPT = 7200 bits/s
                                ↓
              PAS DE CHANGEMENT DE DEBIT
        LA QUALITE DE LA LIGNE REDEVIENT BONNE
```

**Modem 1.**

débit_max(échange) = 9600 bits/s

débit_min(échange) = 9600 bits/s

débit_trans = 9600 bits/s

**Modem 80.**

débit_max(échange) = 9600 bits/s

débit_min(échange) = 9600 bits/s

débit_trans = 9600 bits/s

```
                    1 : DEBIT_OPT = 12000 bits/s
                   80 : DEBIT_OPT = 12000 bits/s
                                ↓
              SURVEILLANCE DE DEBIT_OPT (*)
                    PENDANT 10 MINUTES
                                ↓
                    1 : DEBIT_OPT = 12000 bits/s
                   80 : DEBIT_OPT = 12000 bits/s
                                ↓
                  REMONTEE DE DEBIT PAR 1
```

**Modem 1.**

débit_max(échange) = 12000 bits/s

débit_min(échange) = 9600 bits/s

débit_trans = 12000 bits/s

**Modem 80.**

débit_max(échange) = 12000 bits/s

débit_min (échange) = 9600 bits/s

débit_trans = 12000 bits/s

```
                    1 : DEBIT_OPT = 14400 bits/s
                   80 : DEBIT_OPT = 14400 bits/s
                              ↓
                 SURVEILLANCE DE DEBIT_OPT (*)
                     PENDANT 10 MINUTES
                              ↓
                    1 : DEBIT_OPT = 14400 bits/s
                   80 : DEBIT_OPT = 14400 bits/s
                              ↓
              REMONTEE DE DEBIT PAR 1 OU 80
```

**Modem 1.**

débit_max(échange) = 14400 bits/s

débit_min(échange) = 9600 bits/s

débit_trans = 14400 bits/s

**Modem 80.**

débit_max(échange) = 14400 bits/s

débit_min(échange) = 9600 bits/s

débit_trans = 14400 bits/s

```
                    1 : DEBIT_OPT = 16800 bits/s
                   80 : DEBIT_OPT = 16800 bits/s
                              ↓
                 PAS DE CHANGEMENT DE DEBIT
```

**(\*)** Le taux d'erreur est satisfaisant pendant cette durée et une remontée de débit est envisagée.

On notera que pour éviter un basculement incessant entre deux débits voisins, les seuils de repli et de remontée sont définis, pour chaque critère, avec une hystérésis de 0,1 entre les deux seuils (soit environ 3dB).

**Revendications**

1. Système de transmission pour relier des modems, présentant plusieurs débits communs, comportant des moyens pour adapter le débit de la transmission de ces modems à la qualité de la ligne, comportant des premiers moyens, mis en oeuvre lors d'une phase de mise en communication :
   - pour échanger entre les modems des informations concernant leurs débits,
   - pour fournir une mesure de la qualité du support de transmission,
   - pour changer le débit en fonction de ladite mesure,
   système caractérisé en ce que, pour relier un modem local avec un modem distant impliquant une phase de synchronisation, il comporte des deuxièmes moyens, mis en oeuvre avant toute étape de synchronisation :
   - pour définir un débit minimum d'échange débit_min(échange) tel que :
       débit_min(échange) est la plus grande des valeurs débit_min(local) et débit_min(distant) où débit_min(local) et débit_min(distant) sont respectivement les débits minimum acceptables par les modems local et distant,
   - pour définir un débit maximal d'échange débit_max(échange) tel que :
       débit_max(échange) est la plus petite des valeurs débit_max(local) et débit_max(distant) où débit_max(local) et débit_max(distant) sont respectivement les débits maximum acceptables par les modems local et distant,
       des troisièmes moyens mis en oeuvre après l'étape de synchronisation établir une valeur débit_trans qui est alors le débit de transmission défini par la qualité du support de transmission.

2. Système selon la revendication 1 pour lequel certains des modems répondent aux normes du C.C.I.T.T du type V32, caractérisé en ce que, pour ces modems, l'échange des informations sont les signaux R1, R2 desdites normes.

3. Système selon la revendication 1 ou 2, caractérisé en ce que la mesure de la qualité est effectuée sur le signal d'erreur pilotant les annuleurs d'écho.

4. Système selon l'une des revendications 1 à 3, caractérisé en ce qu'il comporte des moyens de changement de débit est conditionnés par le fait que la valeur débit_opt ~ est proche de débit_trans où débit_opt est le débit optimal déterminé selon la qualité de la ligne pour le sens de transmission du modem distant vers le modem local, débit_opt ayant la valeur de débit_trans plus ou moins var_de_débit où var_de_débit est une variation de débit que le modem tolère, moyens de changement de débit prévus pour effectuer un repli si débit_opt est inférieur à débit_trans et débit_min(échange) est inférieur à débit_trans, et prévus pour remonter le débit si débit_opt est supérieur à débit_trans et débit-max(échange) est supérieur à débit_trans.

5. Procédé pour relier des modem, présentant plusieurs débits communs, et pour adapter le débit de la transmission à la qualité de la ligne, comportant les étapes suivantes mises en oeuvre lors d'une phase de mise en communication :
   - échange entre les modems des informations concernant leurs débits,
   - mesure de la qualité du support de transmission,
   - changement du débit en fonction de ladite mesure,
   procédé impliquant une phase de synchronisation pour relier un modem local avec un modem distant, caractérisé en ce que avant l'étape de synchronisation, on définit :
   - un débit minimum d'échange débit_min(échange) tel que :
       débit_min(échange) est la plus grande des valeurs débit_min(local) et débit_min(distant) où débit_min(local et débit_min-distant sont respectivement les débits minimum acceptables par les modems local et distant,
   - un débit maximal d'échange débit_max(échange) tel que :
       débit_max(échange) est la plus petite des valeurs débit_max(local) et débit_max(distant) où débit_max(local) et débit_max(distant) sont respectivement les débits maximum acceptables par les modems local et distant,
   - un débit de transmission débit_trans égal à
       débit_max(local),
   et en ce qu'après l'étape de synchronisation on définit un débit débit_min(échange) qui est la plus grande valeur de débit_min-local) et débit_min(distant et un débit_max(échange) qui est la plus

EP 0 643 507 A1

petite valeur de débit__max(local) et débit__max(distant), débit__trans étant alors le débit de transmission défini par la qualité du support de transmission.

6.  Procédé selon la revendication 5 pour lequel les modems répondent aux normes du C.C.I.T.T. du type V32, caractérisé en ce que l'échange des informations sont les signaux R1, R2 desditesnormes.

7.  Procédé selon la revendication 5 ou 6, caractérisé en ce que la mesure de la qualité est effectuée sur le signal d'erreur pilotant les annuleurs d'écho.

8.  Procédé selon l'une des revendications 4 à 7, caractérisé en ce que le changement de débit est conditionné par le fait que la valeur débit__opt ~ est proche de débit__trans où débit__opt est le débit optimal déterminé selon la qualité de la ligne pour le sens de transmission du modem distant vers le modem local, débit__opt ayant la valeur de débit__trans plus ou moins var__de__débit où var__de__débit est une variation de débit que le modem tolère, moyens de changement de débit prévus pour effectuer un repli si débit__opt est inférieur à débit__trans et débit__min(échange) est inférieur à débit__trans, et prévus pour remonter le débit si débit__opt est supérieur à débit__trans et débit__max (échange) est supérieur à débit__trans.

9.  Modem comportant des premiers moyens, mis en oeuvre lors d'une phase de mise en communication :
    - pour échanger entre ce modem et un modem distant des informations concernant leurs débits,
    - pour fournir une mesure de la qualité du support de transmission,
    - pour changer le débit en fonction de ladite mesure,
    caractérisé en ce que, pour relier ce modem avec un modem distant impliquant une phase de synchronisation, il comporte des deuxièmes moyens, mis en oeuvre avant toute étape de synchronisation :
    - pour définir un débit minimum d'échange débit__min(échange) tel que :
        débit__min(échange) est la plus grande des valeurs débit__min(local) et débit__min(distant) où débit__min(local) et débit__min(distant) sont respectivement les débits minimum acceptables par les modems local et distant,
    - pour définir un débit maximal d'échange débit__max(échange) tel que :
        débit__max(échange) est la plus petite des valeurs débit__max(local) et débit__max(distant) où débit__max(local) et débit__max(distant) sont respectivement les débits maximum acceptables par les modems local et distant,
        des troisièmes moyens mis en oeuvre après l'étape de synchronisation établir une valeur débit__trans qui est alors le débit de transmission défini par la qualité du support de transmission.

9

FIG.1

FIG. 2

14 400 bits/s
⋮
9 600 bits/s
4 800 bits/s

19 200 bits/s
⋮
4 800 bits/s

14 400 bits/s
⋮
9 600 bits/s
4 800 bits/s

1    85    80

14 400 bits/s
⋮
9 600 bits/s
4 800 bits/s

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | WO-A-90 06637 (CODEX CORPORATION)<br>* abrégé *<br>* page 1, ligne 20 - ligne 29 *<br>* page 3, ligne 10 - ligne 15 *<br>* page 3, ligne 20 - page 7, ligne 6 *<br>* page 28, ligne 1 - ligne 16 *<br>* page 29, ligne 35 - page 30, ligne 8 *<br>* page 30, ligne 29 - page 31, ligne 28 *<br>* figures 1,2,4,5 *<br>* revendications 1,29,12,14,19,20,24,26 *<br>--- | 1-9 | H04L1/12<br>H04M11/06<br>H04L25/38<br>H04L1/20 |
| A | US-A-4 736 388 (EGUCHI)<br>* abrégé *<br>* colonne 1, ligne 6 - colonne 2, ligne 33 *<br>* colonne 5, ligne 61 - colonne 6, ligne 20 *<br>--- | 1-9 | |
| A | EP-A-0 154 565 (CODEX CORPORATION)<br>* page 1, ligne 10 - ligne 21 *<br>* page 3, ligne 1 - page 5, ligne 9 *<br>* revendications 1-7 *<br>* page 19, ligne 16 - ligne 20 *<br>----- | 1-9 | **DOMAINES TECHNIQUES RECHERCHES (Int.Cl.6)**<br><br>H04L<br>H04M |

Le présent rapport a été établi pour toutes les revendications

| Lieu de la recherche | Date d'achèvement de la recherche | Examinateur |
|---|---|---|
| LA HAYE | 28 Novembre 1994 | Gries, T |